# FASCICULE DE BREVET EUROPEEN

(11) **EP 3 937 621 B1**
(45) Date de publication et mention de la délivrance du brevet: **12.11.2025**
(21) Numéro de dépôt: 20725872.4
(22) Date de dépôt: 11.03.2020
(51) Int. Cl.: A01K 1/015, A01K 1/00

(54) **ENCEINTE POUR L'ÉLEVAGE D'ANIMAUX, AVEC ZONE D'ACCUEIL RECOUVERTE PAR UN ÉQUIPEMENT DE SOL ADAPTÉ À SURÉLEVER LES ANIMAUX D'ÉLEVAGE**
GEHEGE FÜR DIE AUFZUCHT VON TIEREN MIT EINEM EMPFANGSBEREICH MIT FÜR DIE AUFZUCHT VON NUTZTIEREN GEEIGNETEN BODENAUSRÜSTUNGEN
ENCLOSURE FOR REARING ANIMALS, WITH A RECEIVING ZONE COVERED BY GROUND EQUIPMENT SUITABLE FOR RAISING THE FARM ANIMALS

(30) Priorité: 15.03.2019 FR 1902697
(43) Date de publication de la demande: 19.01.2022
(73) Titulaire: Group Elastoteck, 44390 Nort sur Erdre (FR)
(72) Inventeur: BIORET, Jean-Vincent, 44390 Petit Mars (FR)
(74) Mandataire: Jacobacci Coralis Harle
(86) Numéro de dépôt international: PCT/FR2020/050498
(87) Numéro de publication internationale: WO 2020/188184

(56) Documents cités:
- EP-A1- 3 469 892
- EP-A1- 3 616 507
- WO-A1-2016/030633
- GB-A- 2 281 184

## Description

### Domaine technique de l'invention

La présente invention concerne, de manière générale, le domaine des équipements de sol pour les enceintes d'élevage.

Elle concerne plus particulièrement les équipements de sol adaptés à surélever les animaux d'élevage, par exemple les vaches laitières, par rapport à un couloir de circulation bordant une zone d'accueil.

### Etat de la technique

Dans les enceintes d'élevage, les animaux passent leur temps dans des zones d'accueil longées par des couloirs de circulation, à savoir par exemple les logettes ou les aires d'alimentation bordant une table d'affouragement.

Il est alors recommandé d'aménager le sol de ces zones d'accueil de manière à éviter différents problèmes, notamment les affections des onglons résultant d'une humidité excessive ou la perturbation des animaux pendant l'évacuation du fumier au niveau des couloirs de circulation au moyen d'un racleur.

De tes aménagements sont par exemple décrits dans les documents GB-2 281 184 et WO-2016/030633.

Pour cela, les zones d'accueil se présentent généralement sous la forme d'une place surélevée du type estrade.

Cette estrade peut prendre la forme d'une marche dont la largeur est comprise entre 50 et 60 cm, ou la forme d'une stalle dont la largeur est généralement comprise entre 1,5 m et 2 m.

De tels aménagements sont normalement réalisés entièrement en béton, au moment de la construction de la zone d'accueil.

Or, la fabrication *a posteriori* de tels aménagements est en pratique particulièrement complexe ; elle est en plus particulièrement dérangeante pour les animaux.

Il existe par conséquent un besoin d'une solution pour l'aménagement de telles zones d'accueil surélevées, pouvant être mise en œuvre aussi bien en rénovation qu'en neuf.

### Présentation de l'invention

Afin de remédier à l'inconvénient précité de l'état de la technique, la présente invention propose une enceinte pour l'élevage d'animaux, par exemple pour des vaches laitières, comportant au moins une zone d'accueil longée par un couloir de circulation avantageusement équipé d'un racleur, selon la revendication 1.

Ladite au moins une zone d'accueil est recouverte par un équipement de sol adapté à surélever les animaux d'élevage par rapport audit couloir de circulation.

Ledit équipement de sol comprend :
- une embase inférieure qui recouvre le sol de ladite zone d'accueil et qui comporte une face supérieure, et
- un revêtement supérieur, rapporté sur la face supérieure de ladite embase inférieure, qui est réalisé dans un matériau apte à subir une déformation élastique et qui comporte une face supérieure destinée à servir de surface d'appui pour les animaux.

Et ladite embase inférieure comprend :
- au moins un remplissage avant, situé à distance dudit couloir de circulation et choisi parmi les matériaux nécessitant un coffrage pour sa pose, et
- au moins un longeron arrière, rapporté entre ledit couloir de circulation et ledit au moins un remplissage avant, participant au coffrage dudit au moins un remplissage avant.

Le revêtement supérieur comprend :
- une bande longitudinale avant, recouvrant ledit au moins un remplissage avant, dont la face supérieure s'étend horizontalement ou au moins approximativement horizontalement, et
- une bande longitudinale arrière, recouvrant ledit au moins un longeron arrière et bordant ledit couloir de circulation, dont la face supérieure présente avec une pente descendante orientée vers ledit couloir de circulation pour favoriser l'écoulement des fluides vers ledit couloir de circulation.

La solution technique selon l'invention peut être mise en œuvre aussi bien en rénovation qu'en neuf.

Cette solution technique présente encore les avantages suivants :
- bien être animal : l'animal est beaucoup moins dérangé lors de l'alimentation ou lors de son repos,
- économique : l'alimentation n'étant pas perturbée, la quantité ingérée est optimale, donc la production est améliorée,
- écologique : la surface de l'équipement étant peu ou pas sale, elle n'émet plus d'ammoniac,
- sanitaire : les pieds sont au sec pendant l'alimentation ou pendant le repos.

En outre, la structure de l'équipement de sol autorise un ajustement « à façon » de sa largeur au moment de sa pose.

En effet, il suffit pour l'opérateur de fixer au sol ledit au moins un longeron arrière, de sorte à définir la largeur de l'équipement de sol. L'opérateur peut ensuite mettre en place le remplissage avant, ledit au moins un longeron arrière participant alors au coffrage de dernier. Enfin, l'opérateur peut recouvrir l'ensemble formant l'embase inférieure, avec le revêtement supérieur.

D'autres caractéristiques non limitatives et avantageuses de l'enceinte conforme à l'invention, prises individuellement ou selon toutes les combinaisons techniquement possibles, sont les suivantes :
- ledit au moins un longeron arrière comporte deux faces opposées : une face inférieure, reposant sur le sol, et une face supérieure, servant de surface de réception pour la bande longitudinale arrière dudit revêtement supérieur, lesquelles faces opposées dudit au moins un longeron arrière convergent depuis une bordure avant juxtaposée audit remplissage avant, vers une bordure arrière, opposée et orientée du côté dudit couloir de circulation ;
- la largeur dudit au moins un longeron arrière est supérieure à 100 mm, de préférence de 200 à 800 mm, de préférence encore de 350 à 650 mm ;
- les faces opposées dudit au moins un longeron arrière définissent entre elles une pente allant de 1 à 10 %, de préférence allant de 1,5 et 6%, de préférence encore allant de 3 à 5% ;
- ledit au moins un longeron arrière comporte : une bordure arrière ayant une hauteur de 80 à 200 mm, et une bordure avant ayant une hauteur de 90 à 210 mm ;
- ledit au moins un longeron arrière est réalisé dans un matériau plastique, avantageusement obtenu par moulage injection ou par extrusion ;
- ledit au moins un remplissage avant est réalisée dans un matériau comprenant des granulats / agrégats éventuellement assemblés par un liant ; le remplissage avant est avantageusement choisi parmi les granulats en caoutchouc, qui sont rapportés en vrac puis compactés (sans liant), ou parmi un béton, coulé et séché *in situ* (issu d'un assemblage entre, d'une part, des matières inertes du type granulats ou agrégats et, d'autre part, un liant).
- ledit équipement de sol comporte une largeur allant de 1200 à 2000 mm, pour recevoir les quatre pattes des animaux, ou allant de 200 et 800 mm, pour recevoir deux pattes des animaux ;
- ledit équipement de sol, ledit revêtement supérieur et ledit longeron arrière comportent chacun une bordure arrière orientée vers le couloir de circulation, et ladite bordure arrière dudit équipement de sol est formée par la bordure arrière dudit revêtement supérieur et par la bordure arrière dudit longeron arrière, superposées l'une sur l'autre ;
- ledit revêtement supérieur comprend deux couches élastiques superposées : une couche élastique supérieure et une couche élastique inférieure, laquelle couche élastique supérieure forme la face supérieure dudit revêtement supérieur, et laquelle couche élastique inférieure est interposée entre ladite couche élastique supérieure et ladite embase inférieure.

La présente invention concerne également l'équipement de sol pour une zone d'accueil dans une enceinte d'élevage longée par un couloir de circulation, pour surélever les animaux d'élevage par rapport audit couloir de circulation.

Cet équipement de sol comprend au moins :
- ledit au moins un longeron arrière, destiné à être rapporté le long dudit couloir de circulation pour participer au coffrage dudit au moins un remplissage avant, et destiné à recevoir une bande longitudinale arrière dudit revêtement supérieur,
- un revêtement supérieur, qui est réalisé dans un matériau apte à subir une déformation élastique et qui comporte une face supérieure destinée à servir de surface d'appui pour les animaux, et
- au moins un remplissage avant, choisi parmi les matériaux nécessitant un coffrage pour sa pose.

La présente invention concerne encore le longeron arrière pour un équipement de sol selon l'invention.

Ce longeron arrière comporte deux faces opposées : une face inférieure, destinée à reposer sur le sol, et une face supérieure, destinée à servir de surface de réception pour une bande longitudinale arrière du revêtement supérieur.

Les faces opposées dudit longeron arrière convergent depuis une bordure avant destinée à être juxtaposée au remplissage avant, vers une bordure arrière, opposée, destinée à être juxtaposée audit couloir de circulation.

La présente invention concerne aussi le procédé pour la pose d'un équipement de sol, adapté à surélever les animaux d'élevage par rapport à un couloir de circulation, dans une enceinte d'élevage.

Ce procédé de pose comprend :
- la fixation au sol dudit au moins un longeron arrière, de sorte notamment à ajuster la largeur dudit équipement de sol, puis
- la mise en place dudit remplissage avant, ledit au moins un longeron arrière participant au coffrage dudit remplissage avant, puis
- le recouvrement de l'embase inférieure avec le revêtement supérieur.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] représente, vue de côté et schématiquement, une aire d'alimentation pour animaux d'élevage qui est raccordée à une table d'affouragement via un cornadis, laquelle aire d'alimentation est aménagée avec un équipement de sol selon l'invention en forme de marche ;
[Fig. 2] est une vue partielle et agrandie de l'aire d'alimentation selon la figure 1, montrant notamment la structure de l'équipement de sol selon l'invention ;
[Fig. 3] représente, vue de côté et schématiquement, une aire d'alimentation pour animaux d'élevage dans laquelle l'équipement de sol selon l'invention est maintenant du type stalle ;
[Fig. 4] est une vue partielle et en perspective de l'aire d'alimentation selon les figures 1 à 3, montrant notamment la structure de l'équipement de sol selon l'invention.

Il est à noter que, sur ces figures, les éléments structurels et/ou fonctionnels communs aux différentes variantes peuvent présenter les mêmes références.

### Enceinte et zone d'accueil

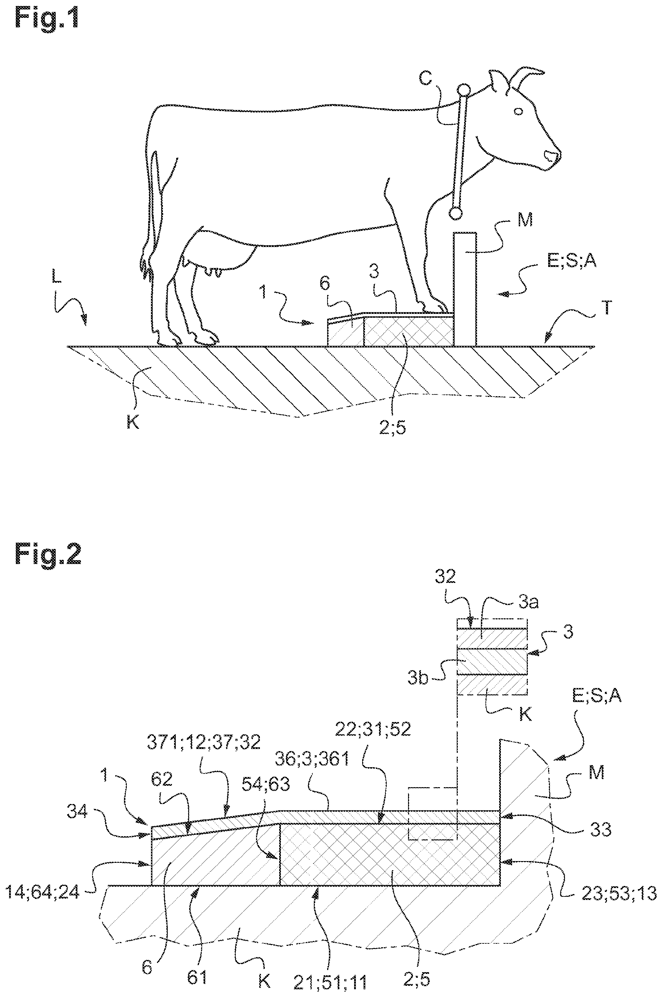

L'équipement de sol 1 selon l'invention, représenté sur les figures 1 à 4, consiste en un accessoire qui est destiné à équiper une enceinte E pour l'élevage d'animaux et qui est destiné à être rapporté sur le sol K d'une zone d'accueil S longée par un couloir de circulation L.

Par « animaux », on entend en particulier les bovins, en particulier les vaches laitières ou les bovins à viande.

L'enceinte d'élevage E consiste en un bâtiment délimité par un bâti et adapté à l'élevage souhaité (par exemple une étable dans le cas de bovins).

Le sol K de cette zone d'accueil S consiste avantageusement en un sol réalisé en béton ou en bitume (figure 1). Ce sol K s'étend avantageusement dans le plan (coplanaire) du couloir de circulation L.

Cette enceinte d'élevage E peut comprendre différentes zones d'accueil S, notamment des aires d'alimentation A ou des logettes, longées par un couloir de circulation L.

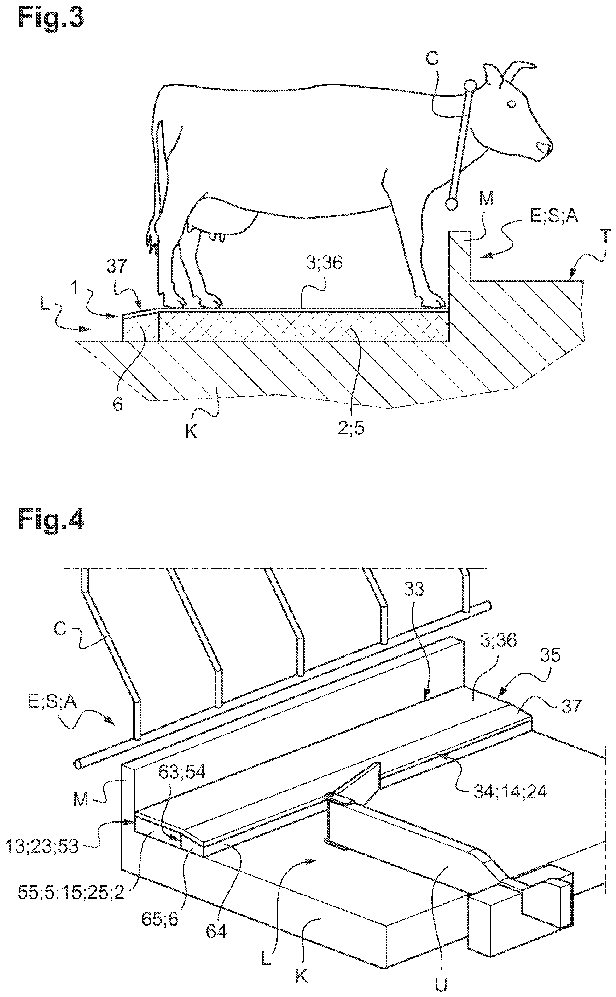

Dans le cas d'une aire d'alimentation A, la zone d'accueil S est, d'un premier côté, longée par un couloir de circulation L et, d'un second côté, raccordée à une table d'affouragement T via un cornadis C (figures 1 et 3).

L'aire d'alimentation A correspond à la zone dans laquelle les animaux s'installent lorsqu'ils se nourrissent au niveau de la table d'affouragement T.

La table d'affouragement T (dite encore table d'alimentation, auge ou râtelier) est la zone dans laquelle les aliments sont déposés / acheminés pour les animaux.

Le cornadis C est le dispositif installé entre l'aire d'alimentation A et la table d'affouragement T, pour limiter les mouvements des animaux lorsqu'ils se nourrissent.

Dans le cas de logettes, la zone d'accueil S comprend des stalles de couchage, et plus particulièrement des espaces d'accueil en forme de logettes ménagées sur au moins une ligne pour la stabulation libre des animaux.

Ces logettes sont avantageusement délimitées latéralement par des séparateurs, par exemple sous la forme d'organes tubulaires.

Les logettes constituent un compromis entre un couchage confortable pour le bovin, le respect du mouvement lever/coucher, une station debout confortable et un minimum de souillures dans la logette.

De manière alternative, la zone d'accueil S peut comporter des espaces d'accueil qui sont aménagés pour la mise en oeuvre d'une stabulation entravée, encore couramment appelées « tie stall ». Dans ce cas, les animaux sont attachés et disposés en long (ou en travers) sur un ou deux rangs.

De manière générale, la zone d'accueil S est ainsi bordée par le couloir de circulation L (représenté très partiellement).

Ce couloir de circulation L est emprunté par les animaux cheminant entre les différents espaces fonctionnels de l'enceinte d'élevage. Ce couloir de circulation L est avantageusement équipé d'un racleur U (visible sur la figure 4).

Le racleur U est destiné à être manœuvré sur la longueur du couloir de circulation L par le biais de moyens de manoeuvre adaptés (non représentés), par exemple du type chaînes ou vérins.

L'automatisation du racleur U permet d'augmenter les fréquences de raclage en système lisier. Ce dispositif permet de racler très souvent, avantageusement jusqu'à 12 passages par jour.

Une fréquence de raclage élevée a pour avantage :
- de diminuer l'humidité ambiante,
- d'améliorer la propreté des animaux (évite les queues sales), et
- de limiter les problèmes sur les pattes des animaux.

### Equipement de sol

Au moins un équipement de sol 1 selon l'invention est rapporté sur le sol K de la zone d'accueil S pour surélever les animaux d'élevage par rapport au couloir de circulation L.

Dans le cas d'une aire d'alimentation A, ledit au moins un équipement de sol 1 est disposé le long du cornadis C, avantageusement contre un bâti ayant la forme d'un muret d'auge M.

Dans le cas de logettes, ledit au moins un équipement de sol 1 peut être disposé le long d'un bâti M, par exemple un mur ou un muret recevant les séparateurs de logettes (non représentés).

Un tel équipement de sol 1 forme ainsi une structure du type estrade qui est adaptée à surélever les animaux d'élevage (en particulier certaines au moins des pattes ou pieds des animaux d'élevage) qui sont présents dans la zone d'accueil S.

Cet équipement de sol 1 est adapté à être rapporté sur le sol K de la zone d'accueil S qui est avantageusement horizontal et dépourvu d'une place surélevée.

Pour cela, l'équipement de sol 1 comprend deux éléments superposés :
- une embase inférieure 2, destinée à reposer sur le sol K, et
- un revêtement supérieur 3, rapporté sur ladite embase inférieure 2 et destiné à servir de surface d'appui pour les animaux.

Dans les différents modes de réalisation de l'invention, l'équipement de sol 1 comporte deux surfaces opposées, définissant sa hauteur / son épaisseur, à savoir :
- une face inférieure 11, recouvrant le sol K, et
- une face supérieure 12, destinée à servir de surface d'appui pour les animaux.

L'équipement de sol 1 est encore délimité par une ceinture de bordures (avantageusement de forme rectangulaire) :
- une bordure longitudinale avant 13, située à distance du couloir de circulation L, avantageusement le long d'un bâti M,
- une bordure longitudinale arrière 14, du côté du couloir de circulation L, et
- deux bordures latérales 15, s'étendant entre les bordures longitudinales 13, 14 précitées (figure 4).

De manière générale, un tel équipement de sol 1 présente les cotes suivantes :
- une épaisseur allant de 50 à 300 mm,
- une longueur allant de 1 m à 100 m (entre les bordures latérales 15), et
- une largeur adaptée à façon (entre les bordures longitudinales 13, 14), par exemple de 200 à 2 000 mm.

En fonction de leur longueur, un ou plusieurs équipements de sol 1 sont ainsi rapportés pour aménager tout ou partie de la longueur de la zone d'accueil S.

### Embase inférieure

L'embase inférieure 2 est réalisée dans un matériau apte à résister aux efforts exercés par l'appui des animaux dont les pattes reposent sur l'équipement de sol 1.

Dans les différents modes de réalisation de l'invention, l'embase inférieure 2 comporte deux surfaces opposées :
- une face inférieure 21, recouvrant le sol K, et
- une face supérieure 22, destiné à recevoir une face inférieure 31 du revêtement supérieur 3.

Cette embase inférieure 2 est encore délimitée par une ceinture de bordures (avantageusement de forme rectangulaire) :
- une bordure longitudinale avant 23, destinée à venir ici à proximité du bâti M,
- une bordure longitudinale arrière 24, destinée à venir ici à distance du bâti M et le long du couloir de circulation L, et
- deux bordures latérales 25, s'étendant entre les bordures longitudinales 23, 24 précitées (figure 4).

Le contour de l'embase inférieure 2 correspond avantageusement au contour du revêtement supérieur 3 sus-jacent. Ce revêtement supérieur 3 est ainsi destiné à recouvrir entièrement l'embase inférieure 2 (la surface du revêtement supérieur 3 est identique, ou au moins approximativement identique, à la surface de l'embase inférieure 2).

Les bordures longitudinales 23, 24 s'étendent avantageusement parallèlement l'une par rapport à l'autre. Ces bordures longitudinales 23, 24 définissent la largeur de l'embase inférieure 2.

Les bordures latérales 25 s'étendent avantageusement, d'une part, parallèlement l'une par rapport à l'autre et, d'autre part, perpendiculairement par rapport aux bordures longitudinales 23, 24. Ces bordures latérales 25 définissent la longueur de l'embase inférieure 2.

L'embase inférieure 2 comprend deux éléments juxtaposés dans le sens avant / arrière :
- au moins un remplissage avant 5, situé à distance du couloir de circulation L et choisi parmi les matériaux nécessitant un coffrage pour sa pose, et
- au moins un longeron arrière 6, rapporté entre le couloir de circulation L et ledit au moins un remplissage avant 5, intervenant dans le coffrage dudit au moins un remplissage avant 5 lors de sa pose.

D'une part, le longeron arrière 6 comporte deux faces opposées, définissant sa hauteur, à savoir :
- une face inférieure 61, reposant sur le sol K, et
- une face supérieure 62, servant de surface de réception pour une bande longitudinale arrière du revêtement supérieur 3.

Ce longeron arrière 6 comporte encore deux bordures longitudinales, définissant sa largeur, à savoir :
- une bordure avant 63, juxtaposée au remplissage avant 5, et
- une bordure arrière 64, opposée et orientée du côté du couloir de circulation L, formant avantageusement une partie inférieure de la hauteur de la bordure arrière 14 de l'équipement de sol 1.

Ce longeron arrière 6 comporte encore deux bordures latérales 65, définissant sa longueur.

Les faces 61, 62 opposées dudit au moins un longeron arrière 6 convergent ici depuis la bordure avant 63, vers la bordure arrière 64.

Les faces 61, 62 opposées dudit au moins un longeron arrière 6 définissent encore entre elles une pente allant de 1 à 10 %, de préférence allant de 1,5 et 6%, de préférence encore allant de 3 à 5%.

Outre la fonction de coffrage, ce longeron arrière 6 a ainsi également l'intérêt de définir une pente pour la bande longitudinale arrière sus-jacente du revêtement supérieur 3.

La largeur dudit au moins un longeron arrière 6 est avantageusement supérieure à 100 mm, de préférence de 200 à 800 mm, de préférence encore de 350 à 650 mm.

De préférence, ledit au moins un longeron arrière 6 comporte encore :
- une bordure arrière 64 ayant une hauteur de 80 à 200 mm (par exemple 140 mm), et
- une bordure avant 63 ayant une hauteur de 90 à 210 mm (par exemple 155 mm).

En pratique, ledit au moins un longeron arrière 6 est réalisé dans un matériau plastique, avantageusement obtenu par moulage injection ou par extrusion.

Par « matériau plastique », on englobe notamment le polyéthylène, le polyéthylène haute densité et les composites plastiques (recyclés ou non).

Encore de manière générale, l'embase inférieure 2 comporte avantageusement plusieurs longerons arrière 6 qui sont disposés coaxialement et en série, avec leurs bordures latérales 65 attenantes.

Ces longerons arrière 6 distincts sont avantageusement assemblés ensemble par des structures d'emboîtement complémentaires (non représentées), par exemple en forme de queue d'aronde.

Selon une variante de réalisation non représentée, l'embase 2 peut encore comprendre au moins deux longerons arrière 6 qui sont fixés au sol, à distance et parallèlement l'un par rapport à l'autre, pour délimiter le coffrage recevant le remplissage avant 5.

D'autre part, ledit au moins un remplissage avant 5 est choisi parmi les matériaux nécessitant un coffrage (moulage) lors de sa pose.

Par « coffrage », on entend un ouvrage de formes pour mouler le remplissage avant 5.

Ce remplissage avant 5 est alors avantageusement réalisé dans un matériau comprenant des granulats / agrégats, éventuellement assemblés par un liant ou en l'absence de liant.

Par exemple, un tel remplissage avant 5 est choisi parmi :
- des granulats en caoutchouc, qui sont rapportés en vrac puis compactés (sans liant), ou
- un béton, coulé et séché *in situ,* issu d'un assemblage entre, d'une part, des matières inertes du type granulats ou agrégats (graviers, sables, etc.) et, d'autre part, un liant (ciment, bitume, argile).

Ce remplissage avant 5 comporte deux faces opposées, définissant sa hauteur, à savoir :
- une face inférieure 51, reposant sur le sol K, et
- une face supérieure 52, servant de surface de réception pour une bande longitudinale avant du revêtement supérieur 3.

Les faces inférieure 51 / supérieure 52 opposées dudit remplissage avant 5 s'étendent ici parallèlement l'une par rapport à l'autre, avantageusement horizontalement ou au moins approximativement horizontalement.

La hauteur de ce remplissage avant 5 correspond avantageusement, ou au moins approximativement, à la hauteur de la bordure avant 63 de ce longeron arrière 6 (par exemple de 90 à 210 mm).

Ce remplissage avant 5 comporte encore deux bordures longitudinales, définissant sa largeur, à savoir :
- une bordure avant 53, à distance du longeron arrière 6 et attenante ici à un bâti M et
- une bordure arrière 54, opposée, orientée du côté du couloir de circulation L et attenante de la bordure avant 63 du longeron arrière 6.

Ledit équipement de sol comporte avantageusement une largeur :
- allant de 1200 à 2000 mm, pour recevoir les quatre pattes des animaux, ou
- allant de 200 et 600 mm, pour recevoir deux pattes des animaux.

Ce remplissage avant 5 comporte encore deux bordures latérales 55, définissant sa longueur.

### Revêtement supérieur

Dans les différents modes de réalisation de l'invention, le revêtement supérieur 3 est réalisé dans un matériau apte à subir une déformation élastique.

Par « matériau apte à subir une déformation élastique », on entend les matériaux choisis parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Ce revêtement supérieur 3 peut être réalisé mono-matériau ou multi-matériaux.

Sur le plan structurel et tel que décrit ci-dessous en relation avec la figure 2, le revêtement supérieur 3 comporte deux faces opposées :
- une face inférieure 31, reposant sur l'embase inférieure 2,
- une face supérieure 32, destiné à servir de surface d'appui pour les animaux.

Pour une adhérence optimale, cette face supérieure 32 est avantageusement munie de reliefs antidérapants qui sont classiques en soi.

Ce revêtement supérieur 3 est encore délimité par une ceinture de bordures (avantageusement de forme rectangulaire) :
- une bordure longitudinale avant 33, destinée à venir ici à proximité du bâti M,
- une bordure longitudinale arrière 34, destinée à venir à distance du bâti M et le long du couloir de circulation L, et
- deux bordures latérales 35, s'étendant entre les bordures longitudinales 33, 34 précitées (figure 2).

Les bordures longitudinales 33, 34 s'étendent avantageusement parallèlement l'une par rapport à l'autre. La cote entre ces bordures longitudinales 33, 34 correspond à la largeur du revêtement supérieur 3.

La bordure longitudinale arrière 34 définit avantageusement une partie supérieure de la hauteur de la bordure arrière 14 de l'équipement de sol 1.

Les bordures latérales 35 s'étendent avantageusement, d'une part, parallèlement l'une par rapport à l'autre et, d'autre part, perpendiculairement par rapport aux bordures longitudinales 33, 34 précitées. La cote entre ces bordures latérales 35 correspond à la longueur du revêtement supérieur 3.

En l'espèce, ledit revêtement supérieur 3 comprend deux bandes, formant un ensemble monobloc diédrique :
- une bande longitudinale avant 36, recouvrant ledit au moins un remplissage avant 5, et
- une bande longitudinale arrière 37, recouvrant ledit au moins un longeron arrière 6 et bordant ledit couloir de circulation L.

La bande longitudinale avant 36 comporte une face supérieure 361, formant une partie avant de la face supérieure 32 du revêtement supérieure 3.

Cette face supérieure 361 s'étend avantageusement horizontalement, ou au moins approximativement horizontalement (c'est-à-dire éventuellement avec une pente descendante orientée vers le couloir de circulation L, dont la pente est inférieure à 3%).

La bande longitudinale arrière 37 comporte également une face supérieure 371, formant une partie arrière de la face supérieure 32 du revêtement supérieure 3.

Cette face supérieure 371 présente une pente descendante, orientée vers ledit couloir de circulation L pour favoriser l'écoulement des fluides vers ce dernier.

La pente descendante s'étend avantageusement de 1 à 10 %, de préférence de 1,5 et 6%, de préférence encore de 3 à 5%.

Cette pente est avantageusement définie par le longeron arrière 6 sous-jacent, et en particulier par ses faces 61, 62 opposées.

De manière générale, au sein d'un équipement de sol 1, le revêtement supérieur 3 peut être réalisé dans une pièce unique, ou dans plusieurs pièces juxtaposées longitudinalement et/ou latéralement et/ou superposées.

A cet égard, dans un mode de réalisation particulier, le revêtement supérieur 3 comprend deux couches élastiques superposées : une couche élastique supérieure 3a et une couche élastique inférieure 3b (figure 1).

La couche élastique supérieure 3a forme la face supérieure 32 du revêtement supérieur 3.

Cette couche élastique supérieure 3a est avantageusement linéaire / continue.

La couche élastique supérieure 3a consiste ici en un film qui recouvre la couche élastique inférieure 3b. Cette couche élastique supérieure 3a résiste avantageusement à l'abrasion et à l'humidité.

Cette couche élastique supérieure 3a est par exemple réalisée dans un matériau choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Cette couche élastique supérieure 3a possède par exemple une épaisseur comprise entre 2 et 5 mm.

La couche élastique inférieure 3b est interposée entre la couche élastique supérieure 3a et l'embase inférieure 2.

Cette couche élastique inférieure 3b est destinée à former une garniture, éventuellement linéaire / continue.

La couche élastique inférieure 3b consiste par exemple en une plaque de granules de caoutchouc (agglomérés ou non agglomérés), de polyuréthane ou de latex.

Cette couche élastique inférieure 3b possède par exemple une épaisseur constante comprise entre 25 et 50 mm.

Cette couche élastique inférieure 3b, avantageusement de contour rectangulaire, possède des dimensions adaptées pour recouvrir et épouser la face supérieure 22 de l'embase inférieure 2.

La couche élastique inférieure 3b présente encore avantageusement une masse volumique comprise entre 150 et 500 kg / m³.

A titre indicatif seulement, chaque pièce du revêtement supérieur 3 a par exemple une longueur comprise entre 1 m et 100 m.

Le revêtement supérieur 3, avant sa pose, est avantageusement soit enroulé sur lui-même pour être stocké sous forme d'un rouleau, soit rangé à plat sous forme d'une plaque.

En l'espèce, la bordure longitudinale arrière 14 dudit équipement de sol 1 est avantageusement formée par la bordure arrière 34 du revêtement supérieur 3 et par la bordure arrière 64 du longeron arrière 6, superposées l'une sur l'autre.

Cette structure de la bordure longitudinale arrière 14 dudit équipement de sol 1 (dont la bordure arrière 64 du longeron arrière 6 est débouchante), confère une résistance mécanique optimale à la bordure longitudinale arrière 14 de l'équipement de sol 1 qui est destinée à coopérer et à guider le racleur U.

### Premier mode de réalisation - Marche

Dans un premier mode de réalisation représenté sur les figures 1 et 2, l'équipement de sol 1 se présente sous la forme d'une marche adaptée à recevoir les pattes antérieures des animaux qui se nourrissent.

La largeur d'un tel équipement de sol 1 est avantageusement comprise entre 350 et 600 mm.

### Second mode de réalisation - Stalle

Dans un second mode de réalisation représenté sur la figure 3, l'équipement de sol 1 se présente sous la forme d'une stalle adaptée à recevoir les quatre pattes des animaux, le cas échéant qui se nourrissent ou qui se reposent.

Un tel équipement de sol 1 présente avantageusement une largeur allant de 1200 à 2000 mm (par exemple de 1200 à 1600 mm pour les veaux et de 1600 à 2000 mm pour les animaux adultes). Dans ce cas, la bande longitudinale avant 36 présente par exemple une largeur allant de 600 à 1650 mm.

### Mise en œuvre

La solution technique selon l'invention peut être mise en oeuvre aussi bien en rénovation qu'en neuf.

L'aménagement de la zone d'accueil S avec l'équipement de sol 1 comprend avantageusement plusieurs opérations successives.

Tout d'abord, ledit au moins un longeron arrière 6 est fixé au sol, à distance et parallèlement à la bordure avant de la zone d'accueil S et du bâti M.

Cette position est ajustée de sorte notamment à définir la largeur attendue pour l'équipement de sol 1.

En particulier, pour obtenir la largeur souhaitée pour l'équipement de sol 1, la position du longeron arrière 6 est ajustée en tenant compte de la cote entre, d'une part, la bordure arrière 64 ou la bordure avant 63 du longeron arrière 6 et, d'autre part, le bâti M avant.

Une fois posé, le longeron arrière 6 (et en particulier sa bordure avant 63) forme une paroi arrière d'un coffrage adapté à recevoir et à participer au moulage du remplissage avant 5.

Ce coffrage est complété :
- par le sol K de la zone d'accueil S, et
- par une paroi latérale avant, ici un bâti M (par exemple un mur ou un muret).

Selon une variante de réalisation non représentée, le coffrage peut encore être formé par au moins deux longerons arrière 6 qui sont fixés au sol, à distance et parallèlement l'un par rapport à l'autre.

Ensuite, le remplissage avant 5 est mis en place (rapporté) dans un état « fluide » (le cas échéant, les granulats / agrégats sont avantageusement libres les uns par rapport aux autres) ; ledit au moins un longeron arrière 6 participe au coffrage de ce remplissage avant 5.

Par exemple :
- les granulats en caoutchouc sont rapportés en vrac puis compactés, ou
- un béton est coulé dans le coffrage, et séché *in situ.*

Ensuite, le revêtement supérieur 3 est rapporté de sorte à recouvrir l'embase inférieure 2.

En fonctionnement et selon les modes de réalisation, les animaux montent soit leurs deux pattes antérieures pour la forme « marche », soit leurs quatre pattes pour la forme « stalle ».

Les éventuels liquides tombant sur l'équipement de sol 1 sont alors conduits et concentrés par simple gravité, cela vers le couloir de circulation L où ils peuvent être déplacés par le racleur U.

Ce racleur U est guidé le long de la bordure arrière 14 de l'équipement de sol 1 par frottement.

La face supérieure 32 du revêtement supérieure 3 reste ainsi, en permanence, relativement sèche. Les pieds surélevés des animaux sont au sec tout au long de la période l'alimentation ou la période de repos, mais aussi au cours des raclages, avec notamment les avantages sanitaires qui en découlent.

Bien entendu, diverses autres modifications peuvent être apportées à l'invention dans le cadre des revendications annexées.

## Revendications

1. Enceinte pour l'élevage d'animaux, par exemple pour des vaches laitières, comportant au moins une zone d'accueil (S) longée par un couloir de circulation (L) avantageusement équipé d'un racleur (U),
laquelle au moins une zone d'accueil (S) est recouverte par un équipement de sol (1) adapté à surélever les animaux d'élevage par rapport audit couloir de circulation (L), ledit équipement de sol (1) comprenant :
- une embase inférieure (2) qui recouvre le sol (K) de ladite zone d'accueil (S) et qui comporte une face supérieure (21), et
- un revêtement supérieur (3), rapporté sur la face supérieure (21) de ladite embase inférieure (2), qui est réalisé dans un matériau apte à subir une déformation élastique et qui comporte une face supérieure (31) destinée à servir de surface d'appui pour les animaux,
**caractérisée en ce que** ladite embase inférieure (2) comprend :
- au moins un remplissage avant (5), situé à distance dudit couloir de circulation (L) et constitué d'un matériau choisi parmi les matériaux nécessitant un coffrage pour sa pose,
lequel remplissage avant (5) comporte deux faces opposées, définissant sa hauteur, à savoir :
- une face inférieure (51), reposant sur le sol (K), et
- une face supérieure (52), servant de surface de réception pour une bande longitudinale avant du revêtement supérieur (3),
lequel au moins un remplissage avant (5) est réalisé dans un matériau comprenant des granulats ou agrégats, éventuellement assemblés par un liant, à savoir :
- un remplissage avant (5) constitué de granulats en caoutchouc, qui sont rapportés en vrac puis compactés, ou
- un remplissage avant (5) constitué d'un béton, coulé et séché *in situ,*
et
- au moins un longeron arrière (6), rapporté entre ledit couloir de circulation (L) et ledit au moins un remplissage avant (5), participant au coffrage dudit au moins un remplissage avant (5),
et **en ce que** ledit revêtement supérieur (3) comprend :
- une bande longitudinale avant (36), recouvrant ledit au moins un remplissage avant (5), dont la face supérieure (361) s'étend horizontalement ou au moins approximativement horizontalement, et
- une bande longitudinale arrière (37), recouvrant ledit au moins un longeron arrière (6) et bordant ledit couloir de circulation (L), dont la face supérieure (371) présente avec une pente descendante orientée vers ledit couloir de circulation (L) pour favoriser l'écoulement des fluides vers ledit couloir de circulation (L).

2. Enceinte pour l'élevage d'animaux, selon la revendication 1, **caractérisée en ce que** ledit au moins un longeron arrière (6) comporte deux faces opposées :
- une face inférieure (61), reposant sur le sol (K), et
- une face supérieure (62), servant de surface de réception pour la bande longitudinale arrière (37) dudit revêtement supérieur (3),
lesquelles faces (61, 62) opposées dudit au moins un longeron arrière (6) convergent depuis une bordure avant (63) juxtaposée audit remplissage avant (5), vers une bordure arrière (64), opposée et orientée du côté dudit couloir de circulation (L).

3. Enceinte pour l'élevage d'animaux selon la revendication 2, **caractérisée en ce que** les faces (61, 62) opposées dudit au moins un longeron arrière (6) définissent entre elles une pente allant de 1 à 10 %, de préférence allant de 1,5 et 6%, de préférence encore allant de 3 à 5%.

4. Enceinte pour l'élevage d'animaux, selon l'une quelconque des revendications 1 à 3, **caractérisée en ce que** la largeur dudit au moins un longeron arrière (6) est supérieure à 100 mm, de préférence de 200 à 800 mm, de préférence encore de 350 à 650 mm.

5. Enceinte pour l'élevage d'animaux l'une quelconque des revendications 1 à 4, **caractérisée en ce que** ledit au moins un longeron arrière (6) comporte :
- une bordure arrière (64) ayant une hauteur de 80 à 200 mm, et
- une bordure avant (63) ayant une hauteur de 90 à 210 mm.

6. Enceinte pour l'élevage d'animaux selon l'une quelconque des revendications 1 à 5, **caractérisée en ce que** ledit au moins un longeron arrière (6) est réalisé dans un matériau plastique, avantageusement obtenu par moulage injection ou par extrusion.

7. Enceinte pour l'élevage d'animaux selon l'une quelconque des revendications 1 à 6, **caractérisée en ce que** ledit équipement de sol (1) comporte une largeur :
- allant de 1200 à 2000 mm, pour recevoir les quatre pattes des animaux, ou
- allant de 200 et 800 mm, pour recevoir deux pattes des animaux.

8. Enceinte pour l'élevage d'animaux selon l'une quelconque des revendications 1 à 7, **caractérisée en ce que** ledit équipement de sol (1), ledit revêtement supérieur (3) et ledit longeron arrière (6) comportent chacun une bordure arrière (14, 34, 64) orientée vers le couloir de circulation (L),
et **en ce que** ladite bordure arrière (14) dudit équipement de sol (1) est formée par la bordure arrière (34) dudit revêtement supérieur (3) et par la bordure arrière (64) dudit longeron arrière (6), superposées l'une sur l'autre.

9. Procédé pour la pose d'un équipement de sol (1), adapté à surélever les animaux d'élevage par rapport à un couloir de circulation (L), dans une enceinte d'élevage (E) selon l'une quelconque des revendications 1 à 8,
lequel procédé de pose comprend :
- la fixation au sol dudit au moins un longeron arrière (6), de sorte notamment à ajuster la largeur dudit équipement de sol (1), puis
- la mise en place dudit remplissage avant (5) dans un état « fluide », ledit au moins un longeron arrière (6) participant au coffrage dudit remplissage avant (5),
lequel au moins un remplissage avant (5) est réalisée dans un matériau comprenant des granulats ou agrégats, éventuellement assemblés par un liant, à savoir :
- un remplissage avant (5) constitué de granulats en caoutchouc, qui sont rapportés en vrac puis compactés, ou
- un remplissage avant (5) constitué d'un béton, coulé et séché *in situ,*
puis
- le recouvrement de l'embase inférieure (2) avec le revêtement supérieur (3).

## Patentansprüche

1. Gehege für die Aufzucht von Tieren, zum Beispiel von Milchkühen, mit mindestens einem Empfangsbereich (S), an dem eine vorzugsweise mit einer Rakel (U) ausgestattete Stallgasse (L) entlang führt,
wobei der mindestens eine Empfangsbereich (S) mit einer Bodenausrüstung (1) bedeckt ist, die dazu ausgelegt ist, die Zuchttiere gegenüber der Stallgasse (L) hochzustellen,
wobei die Bodenausrüstung (1)
- eine untere Basis (2), die den Boden (K) des Empfangsbereichs (S) bedeckt und die eine Oberseite (21) aufweist, und
- einen oberen Belag (3), der auf die Oberseite (21) der unteren Basis (2) aufgebracht ist, der aus einem Material gefertigt ist, das geeignet ist, eine elastische Verformung zu vertragen, und der eine Oberseite (31) aufweist, die dazu bestimmt ist, als Auflagefläche für die Tiere zu dienen,
aufweist,
**dadurch gekennzeichnet, daß** die untere Basis (2)
- mindestens eine vordere Füllung (5), die in einem Abstand zur Stallgasse (L) angeordnet ist und die aus einem Material besteht, das aus Materialien ausgewählt ist, die für deren Verlegung eine Verschalung erfordern,
wobei die vordere Füllung (5) zwei deren Höhe definierende entgegengesetzte Seiten aufweist, und zwar:
- eine auf dem Boden (K) ruhende Unterseite (51) und
- eine als Aufnahmefläche für ein vorderes Längsband des oberen Belags (3) dienende Oberseite (52),
wobei die mindestens eine vordere Füllung (5) aus einem Material gefertigt ist, das eventuell durch ein Bindemittel verbundenes Granulat oder Zuschläge aufweist, und zwar:
- eine aus Gummigranulat, das lose angeliefert und dann verdichtet wird, bestehende vordere Füllung (5) oder
- eine aus einem vor Ort gegossenen und getrockneten Beton bestehende vordere Füllung (5),
und
- mindestens einen hinteren Träger (6), der zwischen der Stallgasse (L) und der mindestens einen vorderen Füllung (5) angeordnet ist und zur Verschalung der mindestens einen vorderen Füllung (5) beiträgt,
und daß der obere Belag (3)
- ein die mindestens eine vordere Füllung (5) bedeckendes vorderes Längsband (36), dessen Oberseite (361) sich horizontal oder im Wesentlichen horizontal erstreckt,
und
- ein den mindestens einen hinteren Träger (6) bedeckendes und die Stallgasse (L) einfassendes hinteres Längsband (37), dessen Oberseite (371) eine zur Stallgasse (L) hin abfallende Schräge aufweist, um das Abfließen von Flüssigkeiten zur Stallgasse (L) hin zu erleichtern,
aufweist.

2. Gehege für die Aufzucht von Tieren gemäß Anspruch 1, **dadurch gekennzeichnet, daß** der mindestens eine hintere Träger (6) zwei entgegengesetzte Seiten aufweist:
- eine auf dem Boden (K) ruhende Unterseite (61) und
- eine als Aufnahmefläche für das hintere Längsband (37) des oberen Belags (3) dienende Oberseite (62),
wobei die entgegengesetzten Seiten (61, 62) des mindestens einen hinteren Trägers (6) von einem an die vordere Füllung (5) angrenzenden vorderen Rand (63) zu einem entgegengesetzten und zur Seite der Stallgasse (L) gerichteten hinteren Rand (64) zusammenlaufen.

3. Gehege für die Aufzucht von Tieren gemäß Anspruch 2, **dadurch gekennzeichnet, daß** die entgegengesetzten Seiten (61, 62) des mindestens einen hinteren Trägers (6) zwischen sich ein Gefälle von 1 bis 10 %, vorzugsweise von 1,5 bis 6 %, besonders bevorzugt von 3 bis 5 % definieren.

4. Gehege für die Aufzucht von Tieren gemäß einem der Ansprüche 1 bis 3, **dadurch gekennzeichnet, daß** die Breite des mindestens einen hinteren Trägers (6) mehr als 100 mm, vorzugsweise zwischen 200 und 800 mm, besonders bevorzugt zwischen 350 und 650 mm beträgt.

5. Gehege für die Aufzucht von Tieren gemäß einem der Ansprüche 1 bis 4, **dadurch gekennzeichnet, daß** der mindestens eine hintere Träger (6)
- einen hinteren Rand (64) mit einer Höhe von 80 bis 200 mm und
- einen vorderen Rand (63) mit einer Höhe von 90 bis 210 mm aufweist.

6. Gehege für die Aufzucht von Tieren gemäß einem der Ansprüche 1 bis 5, **dadurch gekennzeichnet, daß** der mindestens eine hintere Träger (6) aus einem vorteilhafterweise durch Spritzguß oder Strangpressen erhaltenen Plastikmaterial gefertigt ist.

7. Gehege für die Aufzucht von Tieren gemäß einem der Ansprüche 1 bis 6, **dadurch gekennzeichnet, daß** die Bodenausrüstung (1) eine Breite
- von 1200 bis 2000 mm, um die vier Pfoten der Tiere aufzunehmen, oder
- von 200 bis 800 mm, um zwei Pfoten der Tiere aufzunehmen,
aufweist.

8. Gehege für die Aufzucht von Tieren gemäß einem der Ansprüche 1 bis 7, **dadurch gekennzeichnet, daß** die Bodenausrüstung (1), der obere Belag (3) und der hintere Träger (6) jeweils einen zur Stallgasse (L) gerichteten hinteren Rand (14, 34, 64) aufweisen
und daß der hintere Rand (14) der Bodenausrüstung (1) durch den hinteren Rand (34) des oberen Belags (3) und durch den hinteren Rand (64) des hinteren Trägers (6), die beide übereinander liegen, gebildet wird.

9. Verfahren zum Verlegen einer Bodenausrüstung (1), die dazu ausgelegt ist, in einem Gehege (E) für die Aufzucht von Tieren gemäß einem der Ansprüche 1 bis 8 Zuchttiere gegenüber einer Stallgasse (L) hochzustellen,
wobei das Verlegungsverfahren
- das Befestigen des mindestens einen hinteren Trägers (6) auf dem Boden, um insbesondere die Breite der Bodenausrüstung (1) festzulegen, dann
- das Auftragen der vorderen Füllung (5) in einem "flüssigen" Zustand, wobei der mindestens eine hintere Träger (6) zur Verschalung der vorderen Füllung (5) beiträgt,
wobei die mindestens eine vordere Füllung (5) aus einem Material gefertigt wird, das eventuell durch ein Bindemittel verbundenes Granulat oder Zuschläge aufweist, und zwar:
- eine aus lose angeliefertem und dann verdichtetem Gummigranulat bestehende vordere Füllung (5) oder
- eine aus einem vor Ort gegossenen und getrockneten Beton bestehende vordere Füllung (5),
dann
- das Bedecken der unteren Basis (2) mit dem oberen Belag (3)
aufweist.

## Claims

1. Enclosure for rearing animals, for example for dairy cows, with at least one receiving zone (S) bordered by a passageway (L) advantageously fitted with a scraper (U),
said at least one receiving zone (S) being covered by a ground equipment (1) suitable for raising the farm animals above the passageway (L),
said ground equipment (1) comprising:
- a lower base (2) which covers the ground (K) of the receiving zone (S) and which comprises an upper side (21), and
- an upper coating (3) added to the upper side (21) of the lower base (2) and which is made of a material capable of being elastically deformed and which comprises an upper side (31) intended to serve as a bearing surface for the animals, **characterized in that** the lower base (2) comprises:
- at least one front filling (5) located at a distance from the passageway (L) and made of a material selected from the materials needing a formwork for being applied,
said front filling (5) comprising two opposite faces defining its height, namely:
- a lower face (51) being on the ground (K) and
- an upper face (52) serving as a receiving surface for a longitudinal front band of the upper coating (3),
said at least one front filling (5) being made of a material comprising granulates or aggregates, possibly combined by a binder, namely:
- a front filling (5) made of rubber granulates which are deposited loosely and then are compacted, or
- a front filling (5) constituted by a concrete poured and dried on site,
and
- at least one rear beam (6) installed between said passageway (L) and said at least one front filling (5), contributing to formwork said at least one front filling (5),
and **in that** said upper coating (3) comprises:
- a longitudinal front band (36) covering said at least one front filling (5), the upper face (361) of which extends horizontally or at least approximately horizontally,
- a rear longitudinal band (37) covering said at least one rear beam (6) and extending along said passageway (L), the upper surface (371) of which has a downward slope directed towards the passageway (L) for promoting the flow of fluids towards the passageway (L).

2. Enclosure for rearing animals according to claim 1, **characterized in that** said at least one rear beam (6) comprises two opposite sides:
- a lower face (61) being on the ground (K) and
- an upper face (62) serving as a receiving surface for the rear longitudinal band (37) of the upper coating (3),
said opposite faces (61, 62) of said at least one rear beam (6) converging from a front edge (63) juxtaposed with said front filling (5) to an opposite rear edge (64) oriented towards said passageway (L).

3. Enclosure for rearing animals according to claim 2, **characterized in that** the opposite faces (61, 62) of said at least one rear beam (6) define between them a slope of 1 to 10 %, preferably of 1.5 to 6 %, more preferably of 3 to 5 %.

4. Enclosure for rearing animals according to anyone of claims 1 to 3, **characterized in that** the width of said at least one rear beam (6) is more than 100 mm, preferably between 200 and 800 mm, more preferably between 350 and 650 mm.

5. Enclosure for rearing animals according to anyone of claims 1 to 4, **characterized in that** said at least one rear beam (6) comprises:
- a rear edge (64) having a height between 80 and 200 mm, and
- a front edge (63) having a height between 90 and 210 mm.

6. Enclosure for rearing animals according to anyone of claims 1 to 5, **characterized in that** said at least one rear beam (6) is made of a plastic material advantageously made by injection moulding or by extrusion.

7. Enclosure for rearing animals according to anyone of claims 1 to 6, **characterized in that** said ground equipment (1) has a width
- between 1200 and 2000 mm for receiving the four legs of the animals or
- between 200 and 800 mm for receiving two legs of the animals.

8. Enclosure for rearing animals according to anyone of claims 1 to 7, **characterized in that** each one of the ground equipment (1), the upper coating (3), and the rear beam (6) has a rear edge (14, 34, 64) oriented towards the passageway (L),
and **in that** the rear edge (14) of the ground equipment (1) is formed by the rear edge (34) of said upper coating (3) and by the rear edge (64) of said rear beam (6), superimposed upon each other.

9. Method of installing a ground equipment (1) suitable for raising the farm animals above the passageway (L) in an enclosure for rearing animals (E) according to anyone of claims 1 to 8,
wherein the installation method comprises:
- fixing said at least one rear beam (6) on the ground, so as to especially adjust the width of the ground equipment (1), then
- setting up the front filling (5) in a "fluid" state, said at least one rear beam (6) contributing to formwork said front filling (5),
said at least one front filling (5) being made of a material comprising granulates or aggregates, possibly combined by a binder, namely:
- a front filling (5) made of rubber granulates which are deposited loosely and then are compacted, or
- a front filling (5) constituted by a concrete poured and dried on site,
then
- covering the lower base (2) with the upper coating (3).
